# EUROPÄISCHE PATENTSCHRIFT

(11) **EP 0 435 969 B1**
(45) Veröffentlichungstag und Bekanntmachung des Hinweises auf die Patenterteilung: **29.09.1993**
(21) Anmeldenummer: 90907041.9
(22) Anmeldetag: 21.05.1990
(51) Int. Cl.: B60S 1/18, F16H 55/18

(54) **PENDELGETRIEBE, INSBESONDERE FÜR SCHEIBENWISCHER AN KRAFTFAHRZEUGEN**
OSCILLATING GEARING, IN PARTICULAR FOR WINDSCREEN WIPERS IN MOTOR VEHICLES
COMMANDE OSCILLANTE, NOTAMMENT POUR ESSUIE-GLACE DE VEHICULES A MOTEUR

(30) Priorität: 24.05.1989 DE 3916945
(43) Veröffentlichungstag der Anmeldung: 10.07.1991
(73) Patentinhaber: SWF Auto-Electric GmbH, D-74307 Bietigheim-Bissingen (DE)
(72) Erfinder: BRUHN, Rainer, D-7500 Karlsruhe 21 (DE); KLINAR, Robert, D-7120 Bietigheim-Bissingen (DE)
(74) Vertreter: Portwich, Peter
(86) Internationale Anmeldenummer: EP9000814
(87) Internationale Veröffentlichungsnummer: WO9014254

(56) Entgegenhaltungen:
- DE-A- 3 418 128
- DE-B- 1 073 327
- DE-B- 1 186 721
- FR-A- 2 574 731
- GB-A- 1 251 941

## Beschreibung

Die Erfindung geht aus von einem Pendelgetriebe, das insbesondere zum Antrieb von Scheibenwischern an Kraftfahrzeugen verwendet wird und die Merkmale aus dem Oberbegriff des Anspruchs 1 aufweist.

Solche Getriebe, die üblicherweise in einem Getriebegehäuse untergebracht sind, und zusammen mit einem Elektromotor, an den das Getriebegehäuse angebaut ist, eine Antriebseinheit bilden, deren aus dem Getriebegehäuse herausragende Abtriebswelle pendelnd bewegbar ist, werden zum Antrieb von Scheibenwischern in hohen Stückzahlen in der Automobilindustrie eingesetzt. Druckschriftlich ist ein solches Pendelgetriebe z.B. aus der DE-PS 32 37 269 bekannt. Bei diesem bekannten Pendelgetriebe ist auf einer Abtriebswelle, die zugleich auch als Wischerwelle bezeichnet werden kann, da ein Wischarm unmittelbar an ihr befestigt wird, als erstes Getriebeteil ein Zahnsegment verdrehsicher befestigt. Dieses kämmt mit einem zweiten Getriebeteil, das als Zahnsegment einstückig mit einer Schubstange ausgebildet ist, die an ihrem einen Ende drehbar an einen Kurbelzapfen und an ihrem anderen Ende drehbar an eine Kurbelschwinge angelenkt ist, die drehbar auf der Abtriebswelle gelagert ist und dafür sorgt, daß die beiden Zahnsegmente miteinander in Eingriff bleiben. Die Achse des Gelenks zwischen der Schubstange und der Kurbelschwinge fällt dabei mit der Achse des Zahnsegments an der Schubstange zusammen.

Nachdem immer mehr Kraftfahrzeuge gefordert werden, die sowohl für die Insassen als auch für die übrigen Verkehrsteilnehmer geräuscharm sind, wird auch versucht, die von dem bekannten Pendelgetriebe erzeugten Geräusche zu mindern. In diesem Zusammenhang wurde erkannt, daß die Zähne der beiden miteinander kämmenden Getriebeteile beim Umkehren der Drehvorrichtung die Zahnflanken wechseln, an denen sie anliegen und wegen des vorhandenen Zahnspiels dabei ein schlagendes Geräusch verursachen. Ein gewisses Zahnspiel ist jedoch erwünscht, um den Verschleiß an den Zähnen der Getriebeteile nicht zu hoch werden zu lassen und um den Wirkungsgrad des Motors nicht zu sehr zu erniedrigen.

Deshalb ist in der DE-OS 34 18 128 nunmehr ein Scheibenwischerpendelgetriebe beschrieben, das zwei miteinander kämmende Zahnräder bzw. Zahnsegmente besitzt, wobei das zweite Zahnsegment mittels eines Bolzens drehbar an einem Führungselement gelagert ist. Dabei ist der Bolzen in einem Langloch des Führungselements gelagert, welches sich in radialer Richtung zur Antriebswelle des ersten Zahnrades/Zahnsegments erstreckt. Ein oder mehrere Federbügel drücken die beiden Zahnsegmente gegeneinander. Während der Pendelbewegung rückt eine Radialkraft die Zahnsegmente etwas auseinander und sorgt für das gewünschte Zahnspiel. In den Umkehrpunkten wirkt diese Radialkraft nicht. Dort werden die Zahnsegmente durch die Federbügel so aufeinandergepreßt, daß die Zähne tiefer in die Zahnlücken gelangen und somit das Zahnspiel in den Umkehrpunkten kurzfristig seine kleinstmögliche Größe erreicht. Daraus resultiert eine Geräuschminderung. Jedoch erfordert diese wegen der Langlochlagerung und des zusätzlichen Federbügels einen erhöhten Aufwand für die Herstellung und Montage der einzelnen Bauteile.

Der Erfindung liegt deshalb die Aufgabe zugrunde, ein Pendelgetriebe mit den Merkmalen aus dem Oberbegriff des Anspruchs 1 so weiterzuentwickein, daß die Geräusche beim Umkehren der Drehrichtung der pendelnd angetriebenen Welle verringert sind und daß die Geräuschminderung mit geringerem Aufwand erreichbar ist.

Diese Aufgabe wird erfindungsgemäß dadurch gelöst, daß bei dem Pendelgetriebe mit den Merkmalen aus dem Oberbegriff des Anspruchs 1 der Mittelpunkt eines Teilkreises, den die Zähne eines Getriebeteils haben, so gegen die Drehachse des Getriebeteils versetzt ist, daß der Abstand des Teilkreises von der Drehachse zu den Zähnen hin, mit denen das Getriebeteil in einer Umkehrposition in die Zähne des anderen Getriebeteils eingreift, zunimmt.

Diese Maßnahme erfordert nur einen geringeren Aufwand. Das Geräusch wird schon dadurch um ein gewisses Maß verringert, daß das Zahnspiel zwischen den Zähnen der beiden Getriebeteile nur zur einen Umkehrposition hin abnimmt. Natürlich wird man, wann immer dies möglich ist, das Zahnspiel zu beiden Umkehrpositionen hin abnehmen lassen. Das Zahnspiel zwischen den Zähnen der beiden Getriebeteile wird dadurch verringert, daß die Zähne zu einer Umkehrposition hin tiefer in die Zahnlücken zwischen den Zähnen eintauchen.

Die für eine gute Herstellbarkeit des Getriebeteiles vorteilhafte Anordnung der Zähne auf einem Kreis bzw. Kreissegment bleibt erhalten, und zusätzliche Bauteile, wie Federbügel zum radialen Aneinanderpressen beider Getriebeteile, werden nicht benötigt. Letzteres hält auch den Montageaufwand gering.

Vorteilhafte Ausführungen sind in den Ansprüchen 2 bis 8 beschrieben.

Um in beiden Umkehrpositionen gleiche Verhältnisse zu haben, nimmt gemäß Anspruch 2 der Abstand des Teilkreises der Zähne von der Drehachse des Getriebeteils von einem mittleren Zahn aus zu den Zähnen hin zu, mit denen das Getriebeteil jeweils in einer Umkehrposition in die Zähne des anderen Getriebeteils eingreift.

In einer bevorzugten Ausführung wird das Zahnspiel zwischen den Zähnen der beiden Getriebeteile dadurch verringert, daß zu den Zähnen hin, mit denen ein Getriebeteil in einer Umkehrposition in die Zahnlücken des anderen Getriebeteils eingreift, die Breite der Zähne zunimmt oder die Breite der Lücken zwischen den Zähnen abnimmt.

Um den Zahndruck zwischen den Zähnen der beiden Getriebeteile nicht zu groß werden zu lassen, ist es vorteilhaft, wenn die Zähne eines Getriebeteils zu einem Eingriffsbereich in einer Umkehrposition hin radial elastisch nachgebend ausgeführt sind. Dies kann dadurch geschehen, daß sich Zähne eines Getriebeteils an einem frei tragenden Arm befinden.

Vorteilhafterweise befinden sich ein Zahnkranz, dessen Teilkreismittelpunkt zur Drehachse des ihn aufweisenden Getriebeteils versetzt ist, und/oder Zähne und/oder Zahnlücken unterschiedlicher Breite am ersten Getriebeteil, also an dem Getriebeteil, das verdrehsicher auf der pendelnd angetriebenen Welle befestigt ist.

Mehrere Ausführungsführungsbeispiele eines erfindungsgemäßen Pendelgetriebes sind in den Zeichnungen dargestellt. Anhand der Figuren dieser Zeichnungen wird die Erfindung nun näher erläutert.

Es zeigen:
- Fig. 1: einen Teilschnitt durch ein Pendelgetriebe mit vom Prinzip her üblicher Bauart und mit zu den Umkehrpositionen der Abtriebswelle hin verringertem Zahnspiel zwischen zwei Getriebeteilen,
- Fig. 2: in Achsrichtung der Abtriebswelle eine Sicht in das offene Getriebegehäuse mit dem darin untergebrachten erfindungsgemäßen Pendelgetriebe,
- Fig. 3: in vergrößerter Ansicht die beiden Getriebeteile, zwischen denen das Zahnspiel zu den Umkehrpositionen hin verringert ist, in einer mittleren Position zwischen den beiden Umkehrpositionen,,
- Fig. 4: die beiden Getriebeteile in einer Ansicht ähnlich der aus Fig. 3, jedoch in einer Umkehrposition,
- Fig. 5: eine andere Ausführung eines Getriebeteils, bei dem wie bei der Ausführung nach den Fig. 1 bis 4 der Mittelpunkt des Teilkreises des Zahnkranzes gegenüber der Drehachse des Getriebeteils versetzt ist und bei dem Zähne elastisch nachgebend ausgebildet sind, und
- Fig. 6: ein Zahnsegment, bei dem die Zahnbreite von einem mittleren Zahn aus zu den seitlichen Zähnen hin zunimmt.

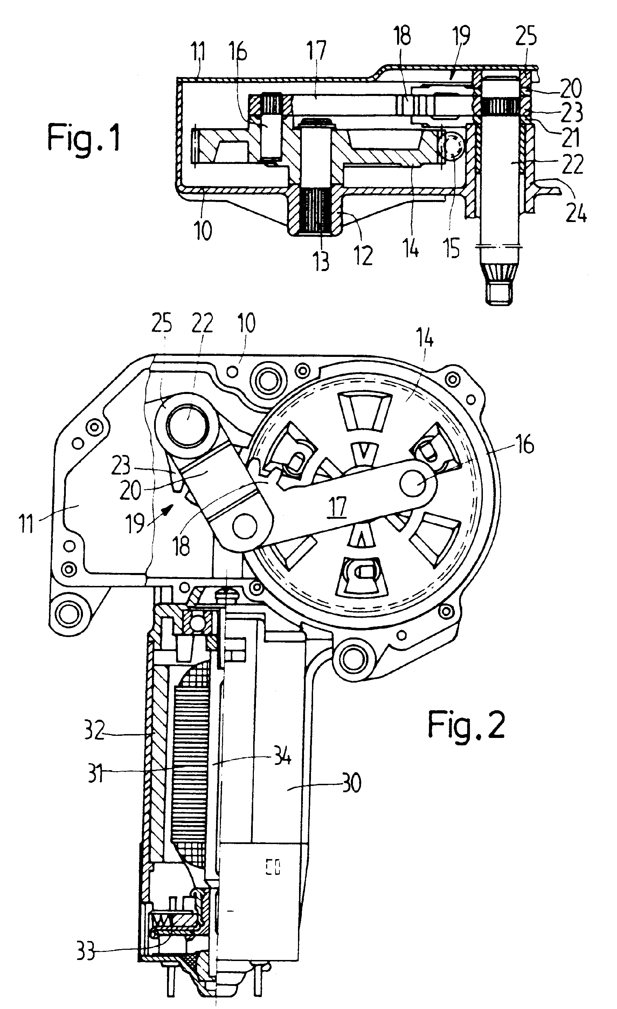

Bei der in den Fig. 1 und 2 gezeigten Antriebseinheit für einen Scheibenwischer an einem Kraftfahrzeug befindet sich ein Pendelgetriebe in einem topfförmigen Getriebegehause 10, das durch einen Deckel 11 verschlossen und an ein Motorengehäuse 30 angeflanscht ist, in dem sich ein Rotor 31, Permanentmagnete 32 und eine Bürstentragplatte 33 befinden.

In ein Lagerauge 12 des Getriebegehäuses 10 ist ein Stehbolzen 13 eingepreßt, auf dem ein Schneckenrad 14 drehbeweglich gelagert ist, das in bekannter Weise von einer Schnecke 15 angetrieben wird, die Teil der Rotorwelle 34 des Elektromotors ist. An dem Schneckenrad 14 ist exzentrisch ein Bolzen 16 drehbeweglich gelagert, an dem eine Schubstange 17 befestigt ist. Der über das Schneckenrad 14 vorstehende Abschnitt des Bolzens 16 kann als Kurbelzapfen einer Kurbel betrachtet werden, deren Länge dem Abstand der Achse des Bolzens 16 von der Achse des Stehbolzens 13 entspricht. An ihrem dem Bolzen 16 entfernten Ende ist die Schubstange 17 als Zahnsegment 18 ausgebildet und zentrisch zu diesem Zahnsegment schwenkbar an einer insgesamt mit 19 bezeichneten Schwinge angelenkt. Die Schwinge besteht aus zwei im Abstand zueinander gehaltenen Hebeln 20 und 21, die zu beiden Seiten eines drehfest auf einer Abtriebswelle 22 sitzenden Ritzels 23 drehbar auf der Abtriebswelle 22 gelagert sind und auch das Zahnsegment 18 an der Schubstange 17 einrahmen. Von der Schwinge 19 werden das Zahnsegment 18 und das Ritzel 23, das ein vollständiges Zahnrad oder, wie im gezeigten Ausführungsbeispiel, auch nur ein Zahnsegment sein kann, in Eingriff miteinander gehalten. Der Hebel 21 liegt auf seiner dem Zahnsegment 23 abgewandten Seite auf einem an das Gehause 10 einstückig angeformten und in das Innere des Gehäuses vorspringenden Lagerauge 24 für die Abtriebswelle 22 auf. Der Hebel 20 stützt sich auf seiner dem Ritzel 23 abgewandten Seite über einen Ring 25 am Deckel 11 ab. Somit sind die Hebel 20 und 21 im Bereich der Abtriebswelle 22 auf beiden Seiten axial abgestützt und konnen deshalb nicht verkanten.

Im Betrieb dreht sich das Schneckenrad 14 und treibt über den Bolzen 16 die Schubstange 17 pendelnd an. Die pendelnde Bewegung der Schubstange 17 wird über das Zahnsegment 18 und das Zahnsegment 23 auf die Abtriebswelle 22 übertragen, auf der in bekannter Weise der Arm eines Wischhebels befestigt werden kann.

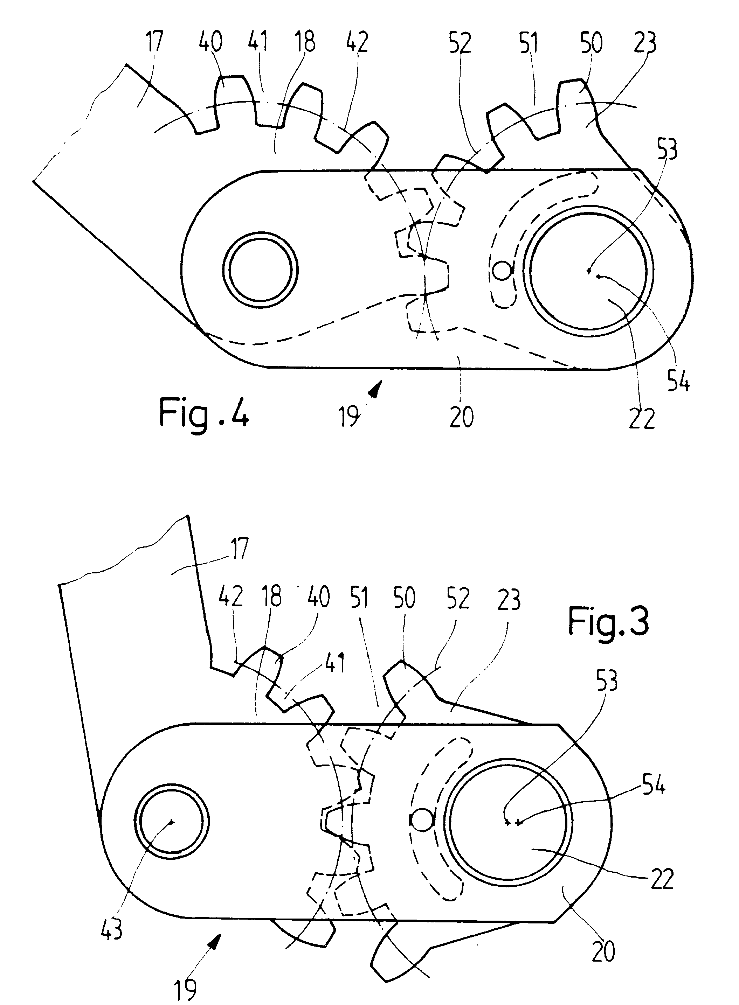

Aus den Fig. 3 und 4 sind die beiden Zahnsegmente 18 und 23 und ihre Anordnung im Getriebe näher dargestellt. Man erkennt den Zahnkranz des Zahnsegments 18 mit den Zähnen 40 und den Zahnlücken 41 zwischen den Zähnen. Der strichpunktiert eingezeichnete Teilkreis 42 der Zähne 40 beisitzt, wie schon erwähnt, einen Mittelpunkt, der auf der Gelenkachse 43 zwischen der Schubstange 17 und der Schwinge 19 liegt. Die Achse des aus den Zähnen 40 und Zahnlücken 41 bestehenden Zahnkranzes des Zahnsegments 18 fällt also mit der Drehachse des Zahnsegments 18 zusammen.

Auch die Zähne 50 und Zahnlücken 51 des Zahnsegments 23 liegen auf einem leilkreis, der nun mit der Bezugszahl 52 versehen ist. Allerdings liegt der Mittelpunkt 54 dieses Teilkreises nun nicht auf der Drehachse 53 der Abtriebswelle 22, die auch die Drehachse des Zahnsegments 23 ist, sondern ist gegenüber dieser Drehachse 53 versetzt, und zwar erkennt man aus den Fig. 3 und 4, daß der Mittelpunkt 54 des Teilkreises 52 und damit die Achse des aus den Zähnen 50 und den Zahnlücken 51 bestehenden Zahnkranzes des Zahnsegments 23 so gewählt ist, daß der mittlere der fünf Zähne 50 des Zahnsegments 23 in der durch die Achse 53 und den Mittelpunkt 54 aufgespannten Ebene liegt, daß also der Teilkreis 52 im Bereich des mittleren Zahnes den geringsten Abstand von der Drehachse 53 hat und dieser Abstand zu den beiden äußersten Zähnen 50 hin zunimmt. Daraus folgt, daß, ausgehend von einem mittleren Eingriffsbereich am Zahnsegment, zu den äußeren Zähnen des Zahnsegments 23 hin die Zähne der beiden Zahnsegmente immer tiefer in die Zahnlücken des jeweils anderen Zahnsegments eintauchen. Aus einem Vergleich der Fig. 3 und 4 ersieht man, daß dadurch das Spiel zwischen den Zähnen der beiden Zahnsegmente in den Umkehrpositionen des Zahnsegments 23 praktisch auf Null reduziert ist und dadurch Umschlaggeräusche in den Umkehrpositionen vermieden werden. Dazu genügt bei der gezeigten Ausführung, wenn der Mittelpunkt 54 des Teilkreises 52 einen Abstand von 0,2 mm von der Drehachse 53 hat.

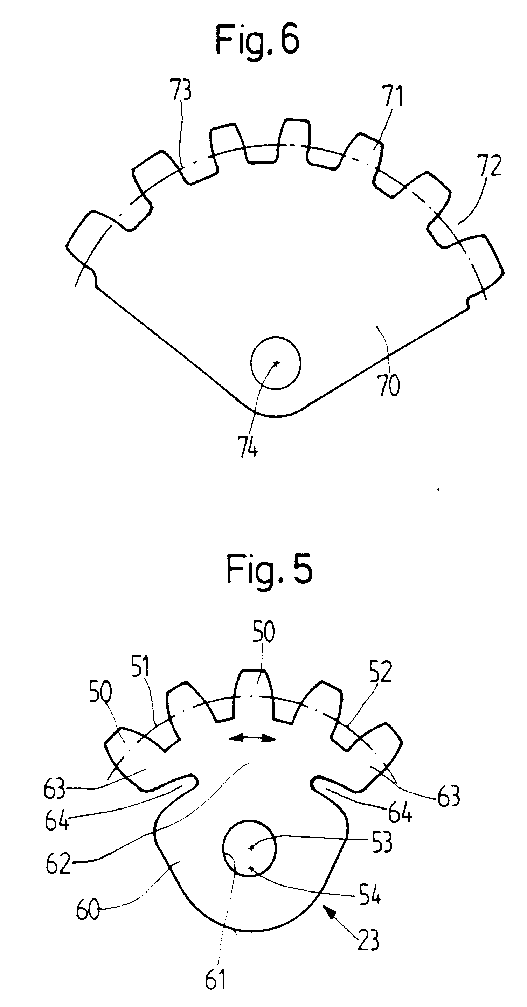

In Fig. 5 ist ein anderes Zahnsegment 23 gezeigt, das anstelle des Zahnsegments 23 der Ausführung nach den Fig. 1 bis 4 verwendet werden kann. Dieses Zahnsegment 23 aus Fig. 5 besitzt eine Basis 60 mit einer Bohrung 61, mit der es auf einer Welle befestigt werden kann. Von der Basis geht radial ein Steg 62 ab, der zwei Arme 63 trägt, die sich von ihm aus, von der Basis 60 durch Spalte 64 getrennt, frei in entgegengesetzte Umfangsrichtungen erstrecken. Radial außen sind die Arme 62 mit fünf Zähnen 50 und dazwischenliegenden Zahnlücken 51 versehen. Der mittlere Zahn 50 befindet sich radial genau außerhalb des Steges 62.

Die Achse 53 der Bohrung 61 entspricht der Drehachse des Zahnsegments 23. Gegenüber dieser Drehachse ist der Mittelpunkt 54 des Teilkreises 52 in gleicher Weise wie bei der Ausführung nach den Fig. 1 bis 4 versetzt, so daß der Abstand des Teilkreises 52 von der Achse 53 ausgehend vom mittleren Zahn 50 zu den äußeren Zähnen hin wiederum zunimmt. Wegen der Spalte 64 sind die Arme 23 etwas elastisch, so daß sie einem Zahndruck, der von Zähnen z. B. des Zahnsegments 18 aus den Fig. 1 bis 4 auf das Zahnsegment 23 nach Fig. 5 ausgeübt wird, nachgeben können. Dadurch wird sicher vermieden, daß die Pressung zwischen den Zahnflanken der Zähne der beiden Zahnsegmente zu hoch wird.

Das Zahnsegment 70 aus Fig. 6, das z. B. anstelle eines Zahnsegments 23 in einem Pendelgetriebe verwendet werden kann, besitzt insgesamt sieben Zähne 71 und dazwischenliegende Lücken 72. Der Mittelpunkt 74 des Teilkreises 73 der Zähne 71 liegt, anders als bei den beiden bisher beschriebenen Ausführungen, auf der Drehachse des Zahnsegments 70. Um ausgehend von dem mittleren Zahn 71 des Zahnsegments 70 das Zahnspiel zwischen den Zähnen 71 und den Zähnen eines anderen Getriebeteils zu den beiden Umkehrpositionen des Zahnsegments 70 hin zu verringern, nehmen die Zahndicken von dem mittleren Zahn 71 aus zu den beiden äußersten Zähnen 71 hin kontinuierlich zu, während die Zahnlücken 72 entsprechend kleiner werden, so daß die Teilung des Zahnsegments überall gleich ist. Auf diese Weise werden, je näher das Zahnsegment 70 einer Umkehrposition kommt, die Zahnlücken des zweiten Getriebeteils von den Zähnen 71 des Zahnsegments 70 mit immer weniger Spiel ausgefüllt, bis schließlich beim Erreichen der Umkehrposition kein Spiel mehr vorhanden ist. Es werden also ebenfalls Geräusche in den Umkehrpositionen des Zahnsegments 70 vermieden.

Es sei noch darauf hingewiesen, daß das Zahnspiel auch schon dadurch verringert werden kann, daß die Breite nur der Zahnlücken abnimmt oder die Breite nur der Zähne zunimmt. Bevorzugt wird jedoch eine Ausführung mit gleichbleibender Teilung.

## Patentansprüche

1. Pendelgetriebe, insbesondere für Scheibenwischer an Kraftfahrzeugen, mit einem ersten mit Zähnen (50, 71) versehenen Getriebeteil (23, 70), das insbesondere drehfest auf einer Abtriebswelle (22) sitzt, und mit einem zweiten mit Zähnen (40) versehenen Getriebeteil (18), das mit dem ersten Getriebeteil (23, 70) kämmt und von dem das erste Getriebeteil (23, 70) zwischen zwei Umkehrpositionen pendelnd antreibbar ist, wobei das Zahnspiel zwischen den Zähnen (50, 71, 40) der beiden Getriebeteile (23, 70, 18) zumindest zur einen Umkehrposition des ersten Getriebeteils (23, 70) hin abnimmt, dadurch gekennzeichnet, daß der Mittelpunkt (54) eines Teilkreises (52), den die Zähne (50) eines Getriebeteils (23) haben, so gegen die Drehachse (53) des Getriebeteils (23) versetzt ist, daß der Abstand des Teilkreises (52) von der Drehachse (53) zu den Zähnen (50) hin, mit denen das Getriebeteil (23) in einer Umkehrposition in die Zahnlücken (41) des anderen Getriebeteils (18) eingreift, zunimmt.

2. Pendelgetriebe nach Anspruch 1, dadurch gekennzeichnet, daß der Abstand des Teilkreises (52) der Zähne (50) von der Drehachse (53) des Getriebeteils (23) von einem mittleren Zahn (50) aus zu den Zähnen (50) hin, mit denen das Getriebeteil (23) jeweils in einer Umkehrposition in die Zahnlücken (41) des anderen Getriebeteils (18) eingreift, zunimmt.

3. Pendelgetriebe nach einem vorhergehenden Anspruch, dadurch gekennzeichnet, daß der Versatz zwischen dem Mittelpunkt (54) des Teilkreises (52) und der Drehachse (53) 0,2 mm beträgt.

4. Pendelgetriebe nach einem vorhergehenden Anspruch, dadurch gekennzeichnet, daß zu den Zähnen (71) hin, mit denen ein Getriebeteil (70) in einer Umkehrposition in die Zahnlücken (41) des anderen Getriebeteils (18) eingreift, die Breite der Zähne (71) zunimmt und/oder die Breite der Lücken zwischen den Zähnen abnimmt.

5. Pendelgetriebe nach einem vorhergehenden Anspruch, dadurch gekennzeichnet, daß die Zähne (50) eines Getriebeteils (23) zu einem Eingriffsbereich in einer Umkehrposition hin radial elastisch nachgebend ausgeführt sind.

6. Pendelgetriebe nach Anspruch 5, dadurch gekennzeichnet, daß sich die Zähne (50) eines Getriebeteils (23) an einem freitragenden Arm (63) befinden.

7. Pendelgetriebe nach Anspruch 6, dadurch gekennzeichnet, daß das Getriebeteil (23) eine Basis (60) hat, von der ein Steg (62) ausgeht, und daß an den Steg (62) nach entgegengesetzten Richtungen hin freitragende, mit Zähnen (50) besetzte Arme (63) angeformt sind.

8. Pendelgetriebe nach einem vorhergehenden Anspruch, dadurch gekennzeichnet, daß sich ein Zahnkranz (50, 51), dessen Teilkreismittelpunkt (54) zur Drehachse (53) versetzt ist, und/oder Zähne (71) und/oder Zahnlücken unterschiedlicher Breite am ersten Getriebeteil (23, 70) befinden.

## Claims

1. A pendulum gear, in particular for windshield wipers of motor vehicles, with a first gear member (23, 70) provided with teeth (50, 71) which is especially non-rotatably seated on a driven end of shaft (22), and with a second gear member (18) provided with teeth (40) which meshes with the first gear member (23, 70) and by way of which the first gear member (23, 70) can be driven in pendulum motion between two reversing positions, wherein the tooth play between the teeth (50, 71, 40) of the two gear members (23, 70, 18) decreases at least towards one reversing position of the first gear member (23, 70),
characterized in that the centre (54) of a reference circle (52) which the teeth (50) of a gear member (23) have is offset with respect to the axis of rotation (53) of the gear member (23) in such a way that the distance of the reference circle (52) from the axis of rotation (53) increases towards the teeth (50) by way of which in a reversing position the gear member (23) engages into the teeth (40) of the other gear member (18).

2. A pendulum gear as claimed in claim 1, characterized in that the distance of the reference circle (52) of the teeth (50) from the axis of rotation (53) of the gear member (23) increases from a tooth (50) in the middle towards the teeth (50), by way of which in each reversing position the gear member (23) engages into the tooth gaps (41) of the other gear member (18).

3. A pendulum gear as claimed in a preceding claim, characterized in that the displacement between the centre (54) of the reference circle (52) and the axis of rotation (53) is 0.2 mm.

4. A pendulum gear as claimed in a preceding claim, characterized in that towards the teeth (71) by way of which in a reversing position one gear member (70) engages into the tooth gaps (41) of the other gear member (18), the width (71) of the teeth increases and/or the width of the gaps between the teeth decreases.

5. A pendulum gear as claimed in a preceding claim, characterized in that the teeth (50) of one gear member (23) are radially elastically and yieldingly formed towards an area of engagement in a reversing position.

6. A pendulum gear as claimed in claim 5, characterized in that the teeth (50) of one gear member (23) are located on a cantilever arm (63).

7. A pendulum gear as claimed in claim 6, characterized in that the gear member (23) has a basis (60) from which a web (62) extends, and in that cantilever arms (63) extending in opposite directions and provided with teeth (50) are formed onto the web (62).

8. A pendulum gear as claimed in a preceding claim, characterized in that a tooth crown (50, 51), the centre of the reference circle (54) of which is offset with respect to the axis of rotation (53), and/or teeth (71) and/or tooth gaps of different width are located on the first gear member (23, 70).

## Revendications

1. Transmission pendulaire, notamment pour essuie-glaces installés sur des véhicules automobiles, comportant une première partie (23,70) pourvue de dents (50,71) et qui est montée notamment avec blocage en rotation sur un arbre mené (22), et une seconde partie (18), qui est pourvue de dents (40), engrène avec la première partie (23,70) de la transmission et qui peut entraînée la première partie (23,70) selon un mouvement pendulaire entre deux positions de rebroussement, le jeu entre les dents (50,71,40) des deux parties (23,70,18) de la transmission diminuant au moins en direction d'une position de rebroussement de la première partie (23,70) de la transmission, caractérisée en ce que le centre (54) d'un cercle primitif (52), sur lequel sont disposées les dents (50) d'une partie (23) de la transmission, est décalé par rapport à l'axe de rotation (53) de la partie (23) de la transmission de telle sorte que la distance entre le cercle primitif (52) et l'axe de rotation (53) augmente en direction des dents (50), avec lesquelles la partie (23) de la transmission engrène, dans une position de rebroussement, dans les entredents (41) de I'autre partie (18) de la transmission.

2. Transmission pendulaire selon la revendication 1, caractérisée en ce que la distance entre le cercle primitif (52) des dents (50) et l'axe de rotation (53) de la partie (23) de la transmission augmente à partir d'une dent centrale (50) en direction des dents (50), avec lesquelles la partie (23) de la transmission engrène, respectivement dans une position de rebroussement, dans les entredents (41) de I'autre partie (18) de la transmission.

3. Transmission pendulaire selon l'une des revendications précédentes, caractérisée en ce que le décalage entre le centre (54) du cercle primitif (52) et l'axe de rotation (53) est égal à 0,2 mm.

4. Transmission pendulaire selon l'une des revendications précédentes, caractérisée en ce que la largeur des dents (71) augmente et/ou la largeur des entredents diminue , en direction des dents (71), avec lesquelles une partie (70) de la transmission engrène, dans une position de rebroussement, dans les entredents (41) de I'autre partie (18) de la transmission.

5. Transmission pendulaire selon l'une des revendications précédentes, caractérisée en ce que les dents (50) d'une partie (23) de la transmission sont agencées de manière à fléchir élastiquement radialement en direction de la zone d'engrènement dans une position de rebroussement.

6. Transmission pendulaire selon la revendication 5, caractérisée en ce que les dents (50) d'une partie (23) de la transmission sont situées sur un bras en console (63).

7. Transmission pendulaire selon la revendication 6, caractérisée en ce que la partie (23) de la transmission possède une embase (60), à partir de laquelle s'étend une barrette (62), et que des bras (63), qui s'étendent en console dans des directions opposées et sont pourvus de dents (50), sont formés sur la barrette (62).

8. Transmission pendulaire selon l'une des revendications précédentes, caractérisée en ce qu'une couronne dentée (50,51), dont le centre (54) du cercle primitif est decalé par rapport à l'axe de rotation (53), et/ou des dents (71) et/ou des entredents ayant des largeurs différentes sont situées sur la première partie (23,70) de la transmission.
